# EUROPEAN PATENT SPECIFICATION

(11) **EP 3 568 634 B1**
(45) Date of publication and mention of the grant of the patent: **27.09.2023**
(21) Application number: 18704142.1
(22) Date of filing: 10.01.2018
(51) Int. Cl.: F23C 10/01, F23G 5/30, F23G 7/10

(54) **FLUIDISED BED REACTION METHODS**
WIRBELBETT-REAKTIONSVERFAHREN
PROCÉDÉS DE RÉACTION EN LIT FLUIDISÉ

(30) Priority: 13.01.2017 GB 201700626
(43) Date of publication of application: 20.11.2019
(73) Proprietor: Sibelco Nederland N.V., 6223 EP Maastricht (NL)
(72) Inventor: PRUSISZ, Bartlomiej, NL-6223 EP Maastricht (NL); MAST, Adriana Pieternella, NL-6223 EP Maastricht (NL)
(74) Representative: Forresters IP LLP
(86) International application number: PCT/EP2018/050516
(87) International publication number: WO 2018/130544

(56) References cited:
- JP-A- 2003 160 789
- US-A1- 2002 134 019
- US-A1- 2010 326 888
- US-A1- 2013 123 564

## Description

The present invention relates to fluidised bed reaction methods.

Combustion is the high-temperature exothermic reaction between a fuel and an oxidant. Gasification is a method that converts organic (for example biomass) or fossil fuel based carbonaceous materials (fuels) into carbon monoxide, hydrogen and/or carbon dioxide. Combustion and gasification are both fluidised bed reaction methods. Combustion and gasification can be considered oxidation methods in the sense that the fuel is oxidised in both cases.

Fluidised bed technology is used in the combustion and gasification of fuels.

In fluidised bed combustion, particles of fuel are suspended in a bed of particulate materials (for example ash, sand and/or limestone). Jets of oxygenated gas (for example air or oxygen depleted air) are blown through the bed to provide the oxygen required for the combustion of the fuel. In some examples, fluidised bed combustion occurs at a temperature of combustion of from 750 to 850°C. Fluidised bed combustion can occur at different temperatures, depending on the boiler design and the fuel.

Similarly, in fluidised bed gasification, particles of fuel are suspended in a bed of particulate materials (for example ash, sand and/or limestone). Jets of oxygenated gas (for example air) and/or steam are blown through the bed to effect gasification of the fuel. One difference between fluidised bed combustion and fluidised bed gasification is the amount of oxygen in the gas. Generally, less oxygen is required for fluidised bed gasification because the amount of oxidation of the fuel in gasification is less than in fluidised bed combustion. Another difference between fluidised bed combustion and fluidised bed gasification is the temperature of the fluidised bed; combustion utilises higher temperatures than gasification, for any particular fuel. In some examples, fluidised bed gasification occurs at temperature of gasification of from 650 to 749°C. Fluidised bed gasification can occur at different temperatures, depending on the boiler design and the fuel.

Fluidised bed combustion is an increasingly common source of energy because fluidised bed combustion can be used to burn fuels which prove difficult to burn using other technologies. Furthermore, SOₓ emissions can be precipitated out using limestone in a fluidised bed. Fluidised bed combustion releases lower levels of NOₓ emissions than other combustion methods because the temperatures of combustion are relatively low.

A fluidised bed, used in either fluidised bed combustion or fluidised bed gasification, can be formed by introducing pressurised gas (pressurised higher than atmospheric pressure) through a bed material. The bed material is formed of a plurality of solid particles. The solid particles are typically formed of ash, sand and/or limestone. A fluidised bed consists of a gas-solid mixture (the gas being the pressurised gas; the solid being the solid particles) that exhibits fluid-like properties. A fluidised bed can be considered a heterogeneous mixture of gas and solid.

A fluidised bed can be used to promote contact between gases and solids and enhance reactions between gases and solids.

Agglomeration of bed materials and fuel ash may cause problems during fluidised bed combustion or gasification. In other words, during fluidised bed combustion or gasification, the ash (inorganic fine particles produced by combustion or gasification of fuel) may agglomerate with one or more components of the bed materials. Ohman et al. (in "The Role of Kaolin in Prevention of Bed Agglomeration during Fluidized Bed Combustion of Biomass Fuels", Energy & Fuels, 2000, 14, 618-624) taught that adding kaolin to a fluidised bed prevented the agglomeration of the fuel ash and bed materials. Prevention of agglomeration led to increased efficiency of fluidised bed combustion of biomass. Furthermore, prevention of agglomeration broadened the range of possible fuels and eliminated operational problems.

There is a need to further increase the efficiency of fluidised bed combustion and fluidised bed gasification.

US 2013/123564 A1, which covers the features specified in the preamble of claim 1, discloses a method for removing nitrogen oxides from nitrate bearing compounds and waste product feeds, using a single fluidized bed reactor vessel.

The present invention is as defined in the claims. In particular, the present invention relates to:
A method of oxidising fuel in a fluidised bed, the method comprising the following steps in the following number order:
(i) adding bed materials to a fluidised bed reactor (1), wherein the bed materials are capable of forming a fluidised bed;
(ii) forming a fluidised bed by applying gas to the bed materials;
(iii) adding fuel to the fluidised bed reactor (1);
(iv) adding both a clay mineral and a catalyst to the fluidised bed reactor (1), wherein the clay mineral and the catalyst are added at the same time;
(v) forming a fluidised bed by applying gas to the mixture of bed materials, clay mineral, catalyst and fuel; and,
(vi) applying heat to oxidise the fuel.

Any disclosed method that does not fall within the scope of the claims is included as an illustrative example.

An aspect of the present disclosure relates to a method of oxidising fuel in a fluidised bed, the method comprising the steps of:
adding bed materials to a fluidised bed reactor, wherein the bed materials are capable of forming a fluidised bed;
adding fuel to the fluidised bed reactor;
adding both a clay mineral and a catalyst to the fluidised bed reactor;
forming a fluidised bed by applying gas to the mixture of bed materials, clay mineral, catalyst and fuel; and,
applying heat to oxidise the fuel.

Preferably, wherein the method of oxidising fuel in a fluidised bed is a method of fluidised bed combustion.

Further preferably, wherein the method of oxidising fuel in a fluidised bed is a method of fluidised bed gasification.

Advantageously, wherein the step of adding both a clay mineral and a catalyst to the fluidised bed reactor occurs before, during or after the step of adding bed materials.

Preferably, wherein the step of adding both a clay mineral and a catalyst to the fluidised bed reactor occurs before, during or after the step of adding fuel.

Further preferably, wherein during the step of adding both a clay mineral and a catalyst: the clay mineral and the catalyst are added at the same time; or, the clay mineral is added first; or, the catalyst is added first.

Advantageously, wherein the steps of the method occur in the following number order:
(i) adding bed materials to a fluidised bed reactor, wherein the bed materials are capable of forming a fluidised bed;
(ii) forming a fluidised bed by applying gas to the bed materials;
(iii) adding fuel to the fluidised bed reactor;
(iv) adding both a clay mineral and a catalyst to the fluidised bed reactor;
(v) forming a fluidised bed by applying gas to the mixture of bed materials, clay mineral, catalyst and fuel; and,
(vi) applying heat to oxidise the fuel.

Preferably, wherein when both the clay mineral and the catalyst are added, they are added separately or as a mixture; optionally, the clay mineral and the catalyst are in the form of separate powders, mixed powders, separate pellets, mixed pellets, separate granules, mixed granules or slurry.

Further preferably, wherein when both the clay mineral and the catalyst are added, the rate of addition of either one or both of the clay mineral and the catalyst is from 0.05 to 2% by weight of the fuel mass.

Advantageously, wherein when both the clay mineral and the catalyst are added, either one or both of the clay mineral and the catalyst are added in one shot or over time.

Preferably, wherein the clay mineral is formed of clay mineral particles with a particle size of 250 µm or less; optionally, a particle size of from 0.1 to 50 µm.

Further preferably, wherein the catalyst is formed of catalyst particles with a particle size of 250 µm or less; optionally, a particle size of from 0.1 to 50 µm.

Advantageously, wherein the relative amount of catalyst in the clay mineral and catalyst added to the fluidised bed reactor ranges from: 50% catalyst to 1% catalyst (by weight); or 30% catalyst to 1% catalyst (by weight); or 20% catalyst to 1% catalyst (by weight); or 10% catalyst to 1% catalyst (by weight)..

Preferably, wherein the clay mineral contains at least 5%, or at least 10%, or at least 20%, or at least 30%, or at least 40%, or at least 50%, or at least 60%, or at least 70%, or at least 80%, or at least 90% kaolinite or halloysite by weight; optionally, additionally containing minerals from the illite and/or smectite groups of minerals.

Further preferably, wherein the catalyst is any one or more of a metal, a metal oxide and/or a metal carbonate.

Advantageously, wherein the catalyst is any one or more of: nickel-chromium (optionally forms of olivine which include both nickel and chromium or compounds of the formula Ni₂₋ₓCrₓAl₃ where x = 0.07 or 0.11), iron (metallic Fe), iron oxides (optionally FeO, Fe₃O₄, Fe₄O₅, FesOe, Fe₅O₇ or Fe₂O₃), FeTiOs, NiO, CaO, CaCOs, Na₂CO₃, K₂CO₃, nickel enriched olivine, olivine and/or CuO.

Preferably, wherein the bed materials comprise any one or more of: ash, sand (for example quartz sand), limestone, feldspar, crushed ceramics and/or calcined clays.

Further preferably, wherein the fuel is any one or more of: fossil fuels (for example coal, peat or natural gas); wood (for example untreated wood, treated wood, recycled wood or wood pellets); char; torrefied biomass; energy crops (for example Miscanthus, Switchgrass, Giant Reed, Reed Canary Grass, Cardoon, Willow, Poplar or Eucalyptus); animal manure (for example cow, horse, pig or poultry manure); organic residues/products (for example agricultural waste, horticultural waste, bagasse, black liquor, food industry products, food industry waste, grain, meal, organic domestic waste, paper, paper pulp, slaughterhouse residue, textile waste or organic residue); municipal solid waste; refuse-derived fuel; plastic; sludge (for example drainage culvert, food industry sludge, paper sludge or sewage); straw (for example stalk, cob or ear straw); a mixture of virgin wood (90% by weight) and grass (10% by weight); or any combination of any one, two, three, four, five, six, seven, eight, nine, ten or more of these fuels.

Advantageously, wherein the gas is an oxidising gas.

Preferably, wherein the gas comprises oxygen.

Further preferably, wherein the gas is any one of air, steam or a mixture of air and steam.

Advantageously, wherein the gas is at atmospheric pressure (101,325 Pa) or at a pressure higher than atmospheric pressure.

Preferably, wherein the heat of the method of oxidising fuel is: from 100 to 1,000°C; or, from 200 to 900°C; or, from 500 to 850°C; or, from 750 to 850°C; or, from 650 to 750°C.

Further preferably, wherein the clay mineral comprises or consists of kaolin.

Advantageously, wherein the catalyst comprises or consists of: olivine; ilmenite; or, olivine and ilmenite.

Preferably, wherein the fuel is a mixture of virgin wood (90% by weight) and grass (10% by weight).

Further preferably, wherein the bed material comprises or consists of quartz sand.

Embodiments of the invention are described below with reference to the accompanying drawings, in which:

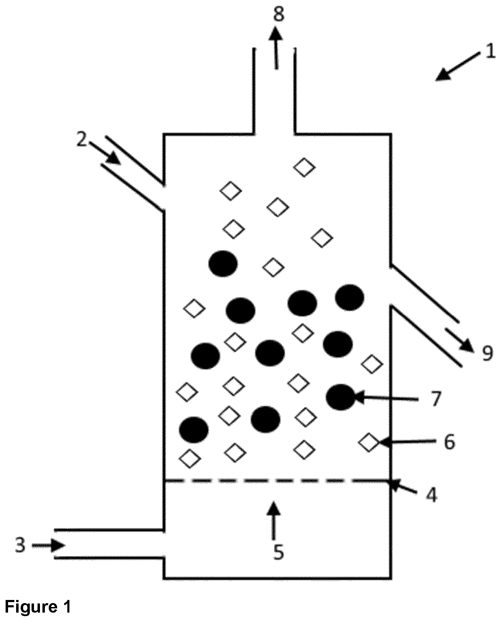

Figure 1 is a schematic diagram of a fluidised bed reactor, which can be used in either fluidised bed combustion or fluidised bed gasification.

Some of the terms used to describe the present invention are set out below:
"Fluidised bed combustion" refers to the combustion of fuel, typically solid fuel, in a hot, bubbling bed, or circulating bed, of bed materials.

"Fluidised bed gasification" refers to the gasification of fuel, typically solid fuel, (forming carbon monoxide, hydrogen and carbon dioxide) in a hot, bubbling bed, or circulating bed, of bed materials.

"Fluidised bed reactor" refers to a reactor that can be used in fluidised bed combustion and/or fluidised bed gasification methods. Typically, fluidised bed reactors are lined with a ceramic material. Examples of suitable ceramic materials include C71 refractories according to the ASTM standard ("non-metallic materials having those chemical and physical properties to make them applicable for structures, or as components of systems, that are exposed to environments above 538°C": see "Circulating Fluidized Bed Boilers: Design, Operation and Maintenance", Prabir Basu, Springer, 2015).

"Fuel" refers to a material that can react with other materials to release chemical energy as heat through oxidation of the fuel. Non-limiting examples of fuel include: fossil fuels (for example coal, peat or natural gas); wood (for example untreated wood, treated wood, recycled wood or wood pellets); char; torrefied biomass; energy crops (for example Miscanthus, Switchgrass, Giant Reed, Reed Canary Grass, Cardoon, Willow, Poplar or Eucalyptus); animal manure (for example cow, horse, pig or poultry manure); organic residues/products (for example agricultural waste, horticultural waste, bagasse, black liquor, food industry products, food industry waste, grain, meal, organic domestic waste, paper, paper pulp, slaughterhouse residue, textile waste or organic residue); municipal solid waste; refuse-derived fuel; plastic; sludge (for example drainage culvert, food industry sludge, paper sludge or sewage); straw (for example stalk, cob or ear straw); a mixture of virgin wood (90% by weight) and grass (10% by weight); or any combination of any one, two, three, four, five, six, seven, eight, nine, ten or more of these examples of fuel.

"Bed materials" refers to the materials making up the bed in a fluidised bed reactor. Bed materials are typically solid particulate materials. Examples of bed materials include ash, sand (for example quartz sand), limestone, feldspar, crushed ceramics and calcined clays. Bed materials are typically inert but can agglomerate with fuel ash under high temperatures and/or pressures.

"Kaolin" refers to minerals that are rich in kaolinite. The amount of kaolinite present in kaolin is at least 60%, or at least 70%, or at least 80%, or at least 90%, or at least 95%.

"Kaolinite" refers to a clay mineral with the chemical composition Al₂Si₂O₅(OH)₄. It is a layered silicate material, with one tetrahedral sheet of silica (SiO₄) linked through oxygen atoms to one octahedral sheet of alumina (AlOe) octahedral.

"Halloysite" refers to a clay mineral with the empirical formula Al₂Si₂O₅(OH)₄. The structure and chemical composition of halloysite is similar to that of kaolinite but the unit layers in halloysite are separated by a monolayer of water molecules. As a result, hydrated halloysite has a basal spacing of 10 Å which is approximately 3 Å larger than that of kaolinite.

"Clay mineral" refers to minerals which contain at least 5%, or at least 10%, or at least 20%, or at least 30%, or at least 40%, or at least 50% or at least 60%, or at least 70%, or at least 80%, or at least 90% kaolinite or halloysite by weight; optionally, additionally containing minerals from the illite and smectite groups of minerals.

"Catalyst" refers to a substance that increases the rate of a chemical reaction without itself undergoing any permanent chemical change. Examples of catalysts used to catalyse oxidation of fuel in fluidised bed combustion or fluidised bed gasification include metals, metal oxides and metal carbonates. Particular examples of catalysts used to catalyse oxidation in fluidised bed combustion or fluidised bed gasification include: nickel-chromium (for example particular forms of olivine which include both nickel and chromium or compounds of the formula Ni₂₋ₓCrₓAl₃ where x = 0.07 or 0.11), iron (metallic Fe), iron oxides (for example FeO, Fe₃O₄, Fe₄O₅, FesOe, Fe₅O₇ or Fe₂O₃), FeTiOs (ilmenite), NiO, CaO, CaCOs, Na₂CO₃, K₂CO₃, nickel enriched olivine, olivine and CuO.

Figure 1 is a schematic diagram of a fluidised bed reactor 1, which can be used in either fluidised bed combustion or fluidised bed gasification. In the fluidised bed reactor 1 of Figure 1, there is an input 2 for solid materials 7 and an input 3 for gas materials 6. The solid materials 7 sit on a porous plate 4, sometimes referred to as a distributor. The gas materials 6 enter the reactor 1 though the input 3 and then through the porous plate 4, in an upwards direction as shown schematically by arrow 5.

The solid materials 7 are illustrated schematically by the circles 7; this is a simplification, there are in fact many millions of particles of solid material in a charged fluidised bed reactor. The gas materials 6 are illustrated schematically by the diamonds 6; this is a simplification, there are in fact many millions of particles and/or bubbles of gas material (formed of gas molecules) in an active fluidised bed reactor.

The gas materials 6 are forced into the input 3 and then through the porous plate 4. At lower gas velocities, the solid materials 7 remain in place as the gas materials 6 pass through the voids between the solid materials 7 (the fluidised bed reactor at this stage is sometimes called a packed bed reactor). As the gas velocity is increased, the reactor 1 reaches a stage where the force of the gas materials 6 on the solid materials 7 balances the weight of the solid materials 7 (this stage is sometimes called incipient fluidisation). As the gas velocity is increased further, the solid materials 7 act like a fluid, for example like water in a boiling receptacle of water (the bed in the fluidised bed reactor at this stage is now called a fluidised bed).

The above description relates to a bubbling bed reactor. Alternatively, with a circulating fluidised bed, as the gas velocity is increased, the solid materials 7 travel with the gas materials 6 to the top of reactor 1. The solid materials 7 reach a stage where their weight is greater than the force of the gas materials 6 and the solid materials 7 fall back down into the bed of solid materials 7.

With reference to Figure 1, solid materials 7 are introduced through input 2. Typical examples of solid materials 7 added to a fluidised bed reactor for fluidised bed combustion or fluidised bed gasification include bed materials; for example ash, sand, limestone, feldspar, crushed ceramics and calcined clays. Fuel is also introduced through input 2, either in one shot or in a number of shots over time as the fuel is depleted.

Gas materials 6 are introduced through input 3. Typical examples of gas materials 6 include air (in the case of fluidised bed combustion) and steam optionally mixed with air (in the case of fluidised bed gasification).

Waste gas materials are taken out of the reactor 1 through output 8. Some components of the waste gas materials can be used in refining processes, particularly in the case of waste gas materials from fluidised bed gasification.

Waste solid materials are taken out of the reactor 1 through output 9, or through other outputs (not shown).

According to the present invention, both a clay mineral and a catalyst are added to a fluidised bed reactor before or during fluidised bed combustion or fluidised bed gasification in the fluidised bed reactor. In Figure 1, both the clay mineral and the catalyst would be added through input 2 or another input (not shown).

Non-limiting examples of catalysts, which can be added to a fluidised bed reactor along with a clay mineral, and some reactions they catalyse in fluidised bed reactors include:
1. Gaseous hydrocarbons and superheated steam over a nickel-chromium catalyst (for example particular forms of olivine which include both nickel and chromium or compounds of the formula Ni₂₋ₓCrₓAl₃ where x = 0.07 or 0.11) react to produce carbon monoxide and hydrogen according to reaction 1:

   CₙHₘ + nH₂O -> nCO + (2n+m)/2 H₂ (Reaction 1)

   Without catalyst some of the hydrocarbons could not react or will only partially react in a fluidised bed reactor. Here, the nickel-chromium catalyst increases the reaction rate and prevents emission of unburned hydrocarbons.
2. The gaseous mixture containing carbon monoxide, obtained from biomass containing an excess of steam, over an iron catalyst (for example iron metal or an iron oxide), reacts according to reaction 2:

   CO + H₂O -> CO₂ + H₂ (Reaction 2)

   Here the iron catalyst shifts the CO/H₂ equilibrium in the favor of hydrogen gas. Hydrogen gas is a preferable product because it can be used as a fuel in other methods.

Reactions 1 and 2, above, do occur in combustion and gasification. In combustion, the gases will combust in the fluidised bed reactor. In gasification, the produced gases can be removed from the reactor and used in further methods.

Another catalyst, and a reaction that it catalyses in a fluidised bed reactor, is:
3. Ilmenite (FeTiOs). These reactions are shown in Reactions 3(1), (2), (3) and (4) below:

2FeTiO₃ + 1/2O₂ ⇔ Fe₂TiO₅ + TiO₂ (Δ*H* = -235 kJ/mol O) (1)

CO + Fe₂TiO₅ + TiO₂ ⇔ 2FeTiO₃ + CO₂ (Δ*H* = -48 kJ/mol O) (2)

1/4CH₄ + Fe₂TiO₅ + TiO₂ ⇔ 2FeTiO₃ + 1/4CO₂ + 1/2H₂O (Δ*H* = 35 kj/mol O) (3)

H₂ + Fe₂TiO₅ + TiO₂ ⇔ 2FeTiO₃ + H₂O (Δ*H* = -8 kJ/mol O) (4)

(Reactions 3(1), (2), (3) and (4))

In reactions 3(1), (2), (3) and (4), the substrate of the first reaction is FeTiOs. After undergoing reactions 3(3) and 3(4), one product is FeTiOs; therefore FeTiOs is acting as a catalyst because it increases the rate of the overall chemical reaction (depleting carbon monoxide and methane and producing carbon dioxide and water) without itself undergoing any permanent chemical change. (This set of reactions was proposed in, "Using an oxygen-carrier as bed material for combustion of biomass in a 12-MWth circulating fluidized-bed boiler", Henrik Thunman, Fredrik Lind, Claes Breitholtz, Nicolas Berguerand, Martin Seemann, Fuel, 113 (2013), 300-309).

Other examples of catalysts, and some methods they catalyse in fluidised bed reactors, include:
4. Ilmenite (FeTiOs) as a catalyst for fluidised bed combustion of agricultural waste or sludge and their mixes with wood.
5. Nickel oxide (NiO), and minerals containing nickel oxide (for example olivine), as a catalyst in fluidised bed gasification of plant based fuels.
6. Nickel oxide (NiO), and minerals containing nickel oxide (for example olivine), as a catalyst in fluidised bed combustion of agricultural waste, municipal solid waste and refuse-derived fuel.
7. Calcium oxide (CaO) as a catalyst in fluidised bed gasification of rice husk, wood or straw.
8. Calcium oxide (CaO), calcium carbonate (CaCOs), sodium carbonate (Na₂CO₃) and/or potassium carbonate (K₂CO₃) as catalysts in catalytic fluidised bed hydrogasification of coal char.
9. Nickel enriched olivine as a catalyst in catalytic tar reduction in fluidised bed biomass steam gasification.
10. Copper oxide (CuO) as a catalyst in fluidised bed combustion of coal.
11. Calcium oxide (CaO) as a catalyst in cracking tar formed by rice husk fluidised bed gasification.
12. Olivine ((Mg, Fe)₂SiO₄) as a catalyst in fluidised bed gasification of biomass.
13. Nickel-chromium compounds of the formula: Ni₂₋ₓCrₓAl₃ where x = 0.07 or 0.11 as a catalyst for fluidised bed gasification or fluidised bed combustion.

In some examples, the size of the catalyst particles added to a fluidised bed reactor are 250 µm or lower. Optionally, the size of the catalyst particles added to a fluidised bed reactor are from 0.1 to 50 µm. The particle sizes are measured by whether the particles fit through a suitably sized filter, for example catalyst particles of 250 µm or lower fit through a filter with a mesh size of 250 µm. Alternatively or additionally, the particle sizes can be measured by laser diffraction (for example using a Malvern^{™} Mastersizer 3000).

A non-limiting example of a clay mineral which can be added to a fluidised bed reactor, along with a catalyst, is kaolinite. In some examples, the size of the kaolinite particles added to a fluidised bed reactor are 250 µm or lower. Optionally, the size of the kaolinite particles added to a fluidised bed reactor are from 0.1 to 50 µm. The particle sizes are measured by whether the particles fit through a suitably sized filter, for example kaolinite particles of 250 µm or lower fit through a filter with a mesh size of 250 µm. Alternatively, the particle sizes can be measured by laser diffraction (for example using a Malvern^{™} Mastersizer 3000).

In some examples, the mixtures of clay mineral and catalyst are added to a fluidised bed reactor in the form of separate powders, mixed powders, separate pellets, mixed pellets, separate granules, mixed granules or slurry.

By adding both a clay mineral and a catalyst (for example a clay mineral and catalyst mixture) to a fluidised bed reactor, before or during fluidised bed combustion or fluidised bed gasification in the fluidised bed reactor, the clay mineral acts as a support to the catalyst and can form layers of clay mineral/catalyst mixtures on the walls of the fluidised bed reactor and/or on the surfaces of other solid materials (for example bed materials; for example ash, sand, limestone, feldspar, crushed ceramics and calcined clays) in the fluidised bed. By acting as a support, the catalyst can adsorb on, or form bonds to, the surface of the clay mineral. In other words, by adding both a clay mineral and a catalyst, there is a synergistic effect. Without wishing to be bound by theory, this synergistic effect occurs at least because: the clay mineral acts to prevent agglomeration of bed materials, fuel ash and/or catalyst; the clay mineral acts as a support for the catalyst which increases the contact surface area between the catalyst, other solid materials (i.e. bed materials and fuel) and gas materials in the fluidised bed reactor; and the clay mineral can act to mitigate poisoning of the catalyst by fuel ash or other reaction by-products. Since the layer of catalyst adsorbed on to, or bonded to, the surface of the clay mineral, is constantly formed, any poisoned catalyst is replaced by fresh catalyst. Furthermore, by adding both a clay mineral and a catalyst, there is a large surface area of the catalyst in the boiler - effectively all walls of the boiler and surfaces of the bed materials become a catalytic surface; hence increasing the efficiency of the catalytic reactions. By way of these benefits, adding both a clay mineral and a catalyst (for example a clay mineral and catalyst mixture) to a fluidised bed reactor increases the efficiency of the oxidation of the fuel (combustion or gasification) in the fluidised bed reactor.

With respect to the layers of clay mineral/catalyst mixtures on the walls of the fluidised bed reactor, over time these layers can detach from the walls and fall into the fluidised bed. This is a beneficial process because the layer formed does not become particularly thick (for example the layer formed has a thickness of up to 3cm, or up to 5cm) and plays an active part in increasing the efficiency of the fluidised bed combustion or fluidised bed gasification.

In some examples, the clay mineral and catalyst are added to a fluidised bed reactor continuously during fluidised bed combustion or fluidised bed gasification. This continuous addition is beneficial because it permits the formation of layers of clay mineral/catalyst mixtures on the walls of the fluidised bed reactor and/or on the surfaces of other materials in the fluidised bed, the subsequent depletion/reaction of those layers and the formation of new layers. In some examples, the rate of addition of the clay mineral and catalyst is from 0.05 to 2% by weight of the fuel mass. Typically, for 1,000 kg of fuel, from 0.5 to 20 kg of clay mineral and catalyst is added, regardless of the rate of fuel consumption. Typical fuel consumption is around 20,000 kg of fuel per hour. Fuel consumption can reach 100,000 kg per hour in large fluidised bed reactors.

The amount of catalyst in a clay mineral/catalyst mixture added to fluidised bed reactors ranges from: 50% catalyst to 1% catalyst (by weight); or 30% catalyst to 1% catalyst (by weight); or 20% catalyst to 1% catalyst (by weight); or 10% catalyst to 1% catalyst (by weight).

### Examples

Kaolin was mixed with olivine to form a mixture of clay mineral (kaolin) and catalyst (olivine). Two mixtures were formed as shown in Table 1:

**Table 1: example clay mineral-catalyst mixtures**

| **Example mixture** | **Amount of kaolin (weight %)** | **Amount of olivine (weight %)** |
|---|---|---|
| Example 1 | 95 | 5 |
| Example 2 | 90 | 10 |

In table 1, the kaolin contained 82% kaolinite by weight the balance being unavoidable impurities, the olivine was generally pure olivine (as produced and sold by Sibelco^{™}).

Examples 1 and 2 were added to a fuel at 0.5 % by mass of the fuel. The fuel consisted of virgin wood (90%) and grass (10%). The bed material was quartz sand.

In further examples, kaolin was mixed with ilmenite to form a mixture of clay mineral (kaolin) and catalyst (ilmenite). Two mixtures were formed as shown in Table 2:

**Table 2: example clay mineral-catalyst mixtures**

| **Example mixture** | **Amount of kaolin (weight %)** | **Amount of ilmenite (weight %)** |
|---|---|---|
| Example 3 | 95 | 5 |
| Example 4 | 90 | 10 |

In table 2, the kaolin contained 82% kaolinite by weight the balance being unavoidable impurities, the ilmenite was generally pure ilmenite (as produced and sold by Sibelco^{™}).

Examples 3 and 4 were added to a fuel at 0.5 % by mass of the fuel. The fuel consisted of virgin wood (90%) and grass (10%). The bed material was quartz sand.

The mixtures of examples 1, 2, 3 and 4, in combination with the fuel and bed material described above, were subjected to fluidised bed combustion in a boiler at 850°C and an oxygen gas concentration of 6% by volume of the gas bubbled through the bed materials.

The results were compared with data obtained for experiments with pure quartz sand as bed material without the addition of clay mineral or catalyst to the fuel. Data were also obtained by adding pure kaolin (containing 82% kaolinite by weight the balance being unavoidable impurities) without any addition of catalyst.

In these comparative experiments, the addition of catalyst (olivine or ilmenite, as in examples 1, 2, 3 and 4) to the kaolin led to a reduction in CO emissions of at least fiftyfold. This was achieved without changing operational conditions and with constant NOx emissions (plus or minus 2%). The reduction in CO emissions shows more efficient combustion of the fuel.

The results are shown in Table 3 below:

**Table 3: NOx and CO emissions from fluidised bed combustion**

| **Additive to boiler (in addition to the fuel and bed materials)** | **NOx emissions during fluidised bed combustion (in mg.m⁻³)** | **CO emissions during fluidised bed combustion (in mg.m⁻³)** |
|---|---|---|
| No mineral additive | 362 | 741 |
| Pure kaolin | 341 | 709 |
| Example 1 | 334 | 4.8 |
| Example 2 | 370 | 6.4 |
| Example 3 | 369 | 7.5 |
| Example 4 | 348 | 9.7 |

There was a small difference observed for the data obtained for 5% and 10% catalyst addition. This indicates that the 5% by weight addition of catalyst was sufficient to reach a beneficial performance of the mixture.

The present inventors additionally found that addition of catalyst (absent any clay mineral) increases the efficiency of the fluidised bed combustion compared with no catalyst. However, the CO emissions from the addition of catalyst (olivine or ilmenite absent any clay mineral) are approximately 50% of the value from adding pure kaolin (as shown in Table 3). In other words, the addition of clay mineral and catalyst provides a reduction in CO emissions (compared to no mineral additive) which is much greater than the sum of the reductions in CO emissions from adding either pure clay mineral (absent any catalyst) or catalyst (absent any clay mineral).

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of oxidising fuel in a fluidised bed, the method comprising the following steps in the following number order:
(i) adding bed materials to a fluidised bed reactor (1), wherein the bed materials are capable of forming a fluidised bed;
(ii) forming a fluidised bed by applying gas to the bed materials;
(iii) adding fuel to the fluidised bed reactor (1);
(iv) adding both a clay mineral and a catalyst to the fluidised bed reactor (1);
(v) forming a fluidised bed by applying gas to the mixture of bed materials, clay mineral, catalyst and fuel; and,
(vi) applying heat to oxidise the fuel; **characterised in that** the clay mineral and the catalyst are added at the same time.

2. The method of claim 1, wherein the method of oxidising fuel in a fluidised bed is a method of fluidised bed combustion.

3. The method of claim 1, wherein the method of oxidising fuel in a fluidised bed is a method of fluidised bed gasification.

4. The method of any one of claims 1 to 3, wherein when both the clay mineral and the catalyst are added, they are added separately or as a mixture; optionally, the clay mineral and the catalyst are in the form of separate powders, mixed powders, separate pellets, mixed pellets, separate granules, mixed granules or slurry.

5. The method of any one of claims 1 to 4, wherein when both the clay mineral and the catalyst are added, the rate of addition of either one or both of the clay mineral and the catalyst is from 0.05 to 2% by weight of the fuel mass.

6. The method of any one of claims 1 to 5, wherein when both the clay mineral and the catalyst are added, either one or both of the clay mineral and the catalyst are added in one shot or over time.

7. The method of any one of claims 1 to 6, wherein the clay mineral is formed of clay mineral particles with a particle size of 250 µm or less; optionally, a particle size of from 0.1 to 50 µm.

8. The method of any one of claims 1 to 7, wherein the catalyst is formed of catalyst particles with a particle size of 250 µm or less; optionally, a particle size of from 0.1 to 50 µm; and/or, wherein the relative amount of catalyst in the clay mineral and catalyst added to the fluidised bed reactor ranges from: 50% catalyst to 1% catalyst by weight; or 30% catalyst to 1% catalyst by weight; or 20% catalyst to 1% catalyst by weight; or 10% catalyst to 1% catalyst by weight.

9. The method of any one of claims 1 to 8, wherein the clay mineral contains at least 5%, or at least 10%, or at least 20%, or at least 30%, or at least 40%, or at least 50%, or at least 60%, or at least 70%, or at least 80%, or at least 90% kaolinite or halloysite by weight; optionally, additionally containing minerals from the illite and/or smectite groups of minerals; and/or, wherein the catalyst is any one or more of a metal, a metal oxide and/or a metal carbonate.

10. The method of any one of claims 1 to 9, wherein the catalyst is any one or more of: nickel-chromium (optionally forms of olivine which include both nickel and chromium or compounds of the formula Ni₂₋ₓCrₓAl₃ where x = 0.07 or 0.11), iron (metallic Fe), iron oxides (optionally FeO, Fe₃O₄, Fe₄O₅, FesOe, Fe₅O₇ or Fe₂O₃), FeTiOs, NiO, CaO, CaCOs, Na₂CO₃, K₂CO₃, nickel enriched olivine, olivine and/or CuO; and/or, wherein the bed materials comprise any one or more of: ash, sand (for example quartz sand), limestone, feldspar, crushed ceramics and/or calcined clays.

11. The method of any one of claims 1 to 10, wherein the fuel is any one or more of: fossil fuels (for example coal, peat or natural gas); wood (for example untreated wood, treated wood, recycled wood or wood pellets); char; torrefied biomass; energy crops (for example Miscanthus, Switchgrass, Giant Reed, Reed Canary Grass, Cardoon, Willow, Poplar or Eucalyptus); animal manure (for example cow, horse, pig or poultry manure); organic residues/products (for example agricultural waste, horticultural waste, bagasse, black liquor, food industry products, food industry waste, grain, meal, organic domestic waste, paper, paper pulp, slaughterhouse residue, textile waste or organic residue); municipal solid waste; refuse-derived fuel; plastic; sludge (for example drainage culvert, food industry sludge, paper sludge or sewage); straw (for example stalk, cob or ear straw); a mixture of virgin wood (90% by weight) and grass (10% by weight); or any combination of any one, two, three, four, five, six, seven, eight, nine, ten or more of these fuels.

12. The method of any one of claims 1 to 11, wherein the gas is an oxidising gas; and/or, wherein the gas comprises oxygen.

13. The method of any one of claims 1 to 12, wherein the gas is any one of air, steam or a mixture of air and steam; and/or, wherein the gas is at atmospheric pressure (101,325 Pa) or at a pressure higher than atmospheric pressure.

14. The method of any one of claims 1 to 13, wherein the heat of the method of oxidising fuel is: from 100 to 1,000°C; or, from 200 to 900°C; or, from 500 to 850°C; or, from 750 to 850°C; or, from 650 to 750°C; and/or, wherein the clay mineral comprises or consists of kaolin.

15. The method of any one of claims 1 to 14, wherein the catalyst comprises or consists of: olivine; ilmenite; or, olivine and ilmenite; and/or, wherein the fuel is a mixture of virgin wood (90% by weight) and grass (10% by weight); and/or, wherein the bed material comprises or consists of quartz sand.

## Patentansprüche

1. Verfahren zur Oxidation von Brennstoff in einer Wirbelschicht, wobei das Verfahren die folgenden Schritte in der folgenden Reihenfolge umfasst:
(i) Hinzufügen von Bettmaterialien zu einem Wirbelschichtreaktor (1), wobei die Bettmaterialien fähig sind, eine Wirbelschicht zu bilden;
(ii) Bilden einer Wirbelschicht durch Anwendung von Gas auf die Bettmaterialien;
(iii) Hinzufügen von Brennstoff zum Wirbelschichtreaktor (1);
(iv) Hinzufügen von sowohl eines Tonminerals als auch eines Katalysators zum Wirbelschichtreaktor (1);
(v) Bilden einer Wirbelschicht durch Anwendung von Gas zur Mischung aus Bettmaterialien, Tonmineral und Brennstoff; und,
(vi) Anwenden von Hitze zum Oxidieren des Brennstoffs; **dadurch gekennzeichnet, dass** das Tonmineral und der Katalysator gleichzeitig hinzugefügt werden.

2. Verfahren nach Anspruch 1, wobei das Verfahren zur Oxidation von Brennstoff in einer Wirbelschicht ein Verfahren von Wirbelschichtverbrennung ist.

3. Verfahren nach Anspruch 1, wobei das Verfahren zur Oxidation von Brennstoff in einer Wirbelschicht ein Verfahren von Wirbelschichtvergasung ist.

4. Verfahren nach irgendeinem der Ansprüche 1 bis 3, wobei, wenn sowohl das Tonmineral als auch der Katalysator hinzugefügt werden, sie getrennt oder als eine Mischung hinzugefügt werden; optional, wobei das Tonmineral und der Katalysator in Form von getrennten Pulvern, gemischten Pulvern, getrennten Pellets, gemischten Pellets, getrenntem Granulat, gemischtem Granulat oder Schlämme sind.

5. Verfahren nach irgendeinem der Ansprüche 1 bis 4, wobei, wenn sowohl das Tonmineral als auch der Katalysator hinzugefügt werden, die Zugaberate entweder eines oder beiden des Tonminerals und des Katalysators von 0,05 bis 2 Gew.-% der Brennstoffmasse beträgt.

6. Verfahren nach irgendeinem der Ansprüche 1 bis 5, wobei, wenn sowohl das Tonmineral als auch der Katalysator hinzugefügt werden, entweder eins oder beide von Tonmineral und Katalysator auf einmal oder über einen längeren Zeitraum hinzugefügt werden.

7. Verfahren nach irgendeinem der Ansprüche 1 bis 6, wobei das Tonmineral aus Partikeln von Tonmineral mit einer Partikelgröße von 250 pm oder weniger gebildet ist; optional, einer Partikelgröße von 0,1 bis 50 pm ist.

8. Verfahren nach irgendeinem der Ansprüche 1 bis 7, wobei der Katalysator aus Katalysatorpartikeln mit einer Partikelgröße von 250 pm oder weniger gebildet ist; optional, einer Partikelgröße von 0,1 bis 50 pm ist; und/oder, wobei die relative Menge von Katalysator im Tonmineral und der dem Wirbelschichtreaktor hinzugefügte Katalysator von: 50 % Katalysator bis 1 % Katalysator gewichtsmäßig; oder 30 % Katalysator bis 1 % Katalysator gewichtsmäßig; oder 20 % Katalysator bis 1 % Katalysator gewichtsmäßig; oder 10 % Katalysator bis 1 % Katalysator gewichtsmäßig reicht.

9. Verfahren nach irgendeinem der Ansprüche 1 bis 8, wobei das Tonmineral wenigstens 5 % oder wenigstens 10 % oder wenigstens 20 % oder wenigstens 30 % oder wenigstens 40 % oder wenigstens 50 % oder wenigstens 60 % oder wenigstens 70 % oder wenigstens 80 % oder wenigstens 90 % Kaolinit oder Halloysit gewichtsmäßig enthält; optional, zusätzlich Minerale aus den Illit- und/oder Smektit-Gruppen von Mineralen enthält; und/oder, wobei der Katalysator irgendeiner oder mehrere eines Metalls, eines Metalloxids und/oder eines Metallkarbonats ist.

10. Verfahren nach irgendeinem der Ansprüche 1 bis 9, wobei der Katalysator einer oder mehreren von: Nickel-Chrom (optional Formen von Olivin, welcher sowohl Nickel als auch Chrom oder Verbindungen der Formel Ni₂-ₓCr_{X}Al₃ einschließt, wobei x = 0,07 oder 0,11), Eisen (metallisches Fe), Eisenoxid (optional FeO, Fe₃O₄, Fe₄0₅, Fe₅O₆, Fe₅O₇ oder Fe₂O₃), FeTiO₃, NiO, CaO, CaCOs, Na₂CO₃, K₂CO₃, mit Nickel angereicherter Olivin, Olivin und/oder CuO; und/oder, wobei die Bettmaterialien irgendeins oder mehrere von: Asche, Sand (beispielsweise Quarzsand), Kalkstein, Feldspat, zerkleinerte Keramik und/oder kalzinierten Ton umfassen.

11. Verfahren nach irgendeinem der Ansprüche 1 bis 10, wobei der Brennstoff einer oder mehreren von: fossilen Brennstoffen (beispielsweise Kohle, Torf oder Erdgas); Holz (beispielsweise unbehandeltes Holz, behandeltes Holz, recyceltes Holz oder Holzpellets); Holzkohle; torrefizierte Biomasse; Energiepflanzen (beispielsweise Miscanthus (Elefantengras), Rutenhirse, Riesenschilf, Rohrglanzgras, Kardone, Weide, Pappel oder Eukalyptus); tierischer Dünger (beispielsweise Kuh-, Pferd-, Schwein- oder Geflügeldünger); organische Reste/Produkte (beispielsweise landwirtschaftliche Abfälle, Gartenbauabfälle, Bagasse, Schwarzlauge, Lebensmittelindustrieprodukte, Lebensmittelindustrieabfälle, Getreide, Schrot, organische Haushaltsabfälle, Papier, Papiermasse, Schlachthofrückstände,Textilabfälle oder organische Rückstände); kommunale Feststoffabfälle; Abfallbrennstoff; Kunststoff; Schlamm (beispielsweise Entwässerungsdurchlass, Lebensmittelindustrieschlamm, Papierschlamm oder Abwasser); Stroh (beispielsweise Stiel-, Kolben- oder Ährenstroh); eine Mischung aus Neuholz (90 Gew.-%) und Gras (10 Gew.-%); oder irgendeine Kombination von beliebigen einem, zwei, drei, vier, fünf, sechs, sieben, acht, neun, zehn oder mehr dieser Brennstoffe.

12. Verfahren nach irgendeinen der Ansprüche 1 bis 11, wobei das Gas ein oxidierendes Gas ist; und/oder, wobei das Gas Sauerstoff umfasst.

13. Verfahren nach irgendeinem der Ansprüche 1 bis 12, wobei das Gas irgendeines aus Luft, Dampf oder einer Mischung aus Luft und Dampf ist; und/oder, wobei das Gas bei Atmosphärendruck (101,325 Pa) oder bei einem höheren als Atmosphärendruck ist.

14. Verfahren nach irgendeinem der Ansprüche 1 bis 13, wobei die Hitze des Verfahrens der Oxidation von Brennstoff ist: von 100 bis 1.000 °C; oder von 200 bis 900 °C; oder von 500 bis 850 °C; oder von 750 bis 850 °C; oder von 650 bis 750 °C; und/oder, wobei das Tonmineral Kaolin umfasst oder daraus besteht.

15. Verfahren nach irgendeinem der Ansprüche 1 bis 14, wobei der Katalysator umfasst oder besteht, aus: Olivin; Ilmenit; oder Olivin und Ilmenit; und/oder, wobei der Brennstoff ist Mischung aus Neuholz (90 Gew.-% ) und Gras (10 Gew.-%) ist; und/oder, wobei das Bettmaterial Quarzsand umfasst oder daraus besteht.

## Revendications

1. Un procédé d'oxydation d'un combustible dans un lit fluidisé, le procédé comprenant les étapes suivantes dans l'ordre suivant :
(i) ajouter des matériaux de lit à un réacteur de lit fluidisé (1), dans lequel les matériaux de lit sont capables de former un lit fluidisé ;
(ii) former un lit fluidisé en appliquant un gaz aux matériaux de lit ;
(iii) ajouter un combustible au réacteur de lit fluidisé (1) ;
(iv) ajouter à la fois un minéral argileux et un catalyseur au réacteur de lit fluidisé (1) ;
(v) former un lit fluidisé en appliquant un gaz au mélange de matériaux de lit, minéral argileux, catalyseur et combustible ; et,
(vi) appliquer une chaleur pour oxyder le combustible ;
**caractérisé en ce que** le minéral argileux et le catalyseur sont ajoutés en même temps.

2. Le procédé selon la revendication 1, dans lequel le procédé d'oxydation d'un combustible dans un lit fluidisé est un procédé de combustion en lit fluidisé.

3. Le procédé selon la revendication 1, dans lequel le procédé d'oxydation d'un combustible dans un lit fluidisé est un procédé de gazéification en lit fluidisé.

4. Le procédé selon l'une quelconque des revendications 1 à 3, dans lequel, quand le minéral argileux et le catalyseur sont tous deux ajoutés, ils sont ajoutés distinctement ou sous forme de mélange ; en option, le minéral argileux et le catalyseur sont sous forme de poudres distinctes, poudres mélangées, granulés distincts, granulés mélangés, granules distincts, granules mélangés ou suspension épaisse.

5. Le procédé selon l'une quelconque des revendications 1 à 4, dans lequel, quand le minéral argileux et le catalyseur sont tous deux ajoutés, le taux d'ajout de, soit le minéral argileux, soit le catalyseur, soit les deux, est compris entre 0,05 et 2 % en poids de la masse de combustible.

6. Le procédé selon l'une quelconque des revendications 1 à 5, dans lequel, quand le minéral argileux et le catalyseur sont tous deux ajoutés, soit le minéral argileux, soit le catalyseur, soit les deux, sont ajoutés en une fois ou sur une période de temps.

7. Le procédé selon l'une quelconque des revendications 1 à 6, dans lequel le minéral argileux est formé de particules de minéral argileux ayant une taille de particule égale ou inférieure à 250 µm ; en option, une taille de particule comprise entre 0,1 à 50 µm.

8. Le procédé selon l'une quelconque des revendications 1 à 7, dans lequel le catalyseur est formé de particules de catalyseur ayant une taille de particule égale ou inférieure à 250 µm ; en option, une taille de particule comprise entre 0,1 à 50 µm ; et/ou, dans lequel la quantité relative de catalyseur dans le minéral argileux et le catalyseur ajoutés au réacteur de lit fluidisé est comprise : entre 50 % de catalyseur et 1 % de catalyseur en poids ; ou entre 30 % de catalyseur et 1 % de catalyseur en poids ; ou entre 20 % de catalyseur et 1 % de catalyseur en poids ; ou entre 10 % de catalyseur et 1 % catalyseur en poids.

9. Le procédé selon l'une quelconque des revendications 1 à 8, dans lequel le minéral argileux contient au moins 5 %, ou au moins 10 %, ou au moins 20 %, ou au moins 30 %, ou au moins 40 %, ou au moins 50 %, ou au moins 60 %, ou au moins 70 %, ou au moins 80 %, ou au moins 90 % de kaolinite ou d'halloysite en poids ; en option, contenant en plus des minéraux des groupes de minéraux d'illite et/ou de smectite ; et/ou, dans lequel le catalyseur est un ou plusieurs éléments parmi un métal, un oxyde de métal et/ou un carbonate de métal.

10. Le procédé selon l'une quelconque des revendications 1 à 9, dans lequel le catalyseur est un ou plusieurs éléments parmi : nickel-chrome (en option, des formes d'olivine qui incluent à la fois du nickel et du chrome ou des composés de la formule Ni₂₋ₓCrₓAl₃ où x = 0,07 ou 0,11), fer (Fe métallique), oxydes de fer (en option FeO, Fe₃O₄, Fe₄O₅, Fe₅O₆, Fe₅O₇ ou Fe₂O₃), FeTiOs, NiO, CaO, CaCOs, Na₂CO₃, K₂CO₃, olivine enrichi de nickel, olivine et/ou CuO ; et/ou, dans lequel les matériaux de lit comprennent un ou plusieurs éléments parmi : cendre, sable (par exemple sable de quartz), calcaire, feldspath, céramique broyée et/ou argiles calcinées.

11. Le procédé selon l'une quelconque des revendications 1 à 10, dans lequel le combustible est un ou plusieurs éléments parmi : combustibles fossiles (par exemple charbon, tourbe ou gaz naturel) ; bois (par exemple bois non traité, bois traité, bois recyclé ou granulés de bois) ; charbon de bois ; biomasse torréfiée ; cultures énergétiques (par exemple miscanthus, panic raide, herbe géante, alpiste roseau, cardon, saule, peuplier ou eucalyptus) ; fumier d'animal (par exemple vache, cheval, cochon ou volaille) ;
résidus/produits organiques (par exemple déchets agricoles, déchets horticoles, bagasse, liqueur noire, produits de l'industrie alimentaire, déchets de l'industrie alimentaire, grains, farine, déchets domestiques organiques, papier, pulpe de papier, résidus d'abattoir, déchets textiles ou résidus organiques) ; déchets solides municipaux ; combustible dérivé d'ordures ; plastique ; boues (par exemple ponceau de drainage, boues de l'industrie alimentaire, boues de papeterie ou eaux d'égout) ; paille (par exemple tige, épi ou paille d'épi) ; un mélange de bois vierge (90 % en poids) et d'herbe (10 % en poids) ; ou une combinaison quelconque d'un, deux, trois, quatre, cinq, six, sept, huit, neuf, dix ou plus de ces combustibles.

12. Le procédé selon l'une quelconque des revendications 1 à 11, dans lequel le gaz est un gaz oxydant ; et/ou, dans lequel le gaz comprend l'oxygène.

13. Le procédé selon l'une quelconque des revendications 1 à 12, dans lequel le gaz est un élément parmi l'air, la vapeur ou un mélange d'air et vapeur ; et/ou, dans lequel le gaz est à la pression atmosphérique (101 325 Pa) ou à une pression supérieure à la pression atmosphérique.

14. Le procédé selon l'une quelconque des revendications 1 à 13, dans lequel la chaleur du procédé d'oxydation d'un combustible est comprise : entre 100 et 1000°C ; ou entre 200 et 900°C ; ou entre 500 et 850°C ; ou entre 750 et 850°C ; ou entre 650 et 750°C ; et/ou, dans lequel le minéral argileux comprend ou est constitué de kaolin.

15. Le procédé selon l'une quelconque des revendications 1 à 14, dans lequel le catalyseur comprend ou est constitué de : olivine ; ilménite ; ou olivine et ilménite ; et/ou, dans lequel le combustible est un mélange de bois vierge (90 % en poids) et d'herbe (10 % en poids) ; et/ou, dans lequel le matériau de lit comprend ou est constitué de sable de quartz.
